# EUROPÄISCHE PATENTSCHRIFT

(11) **EP 0 425 999 B1**
(45) Veröffentlichungstag und Bekanntmachung des Hinweises auf die Patenterteilung: **18.01.1995**
(21) Anmeldenummer: 90120419.8
(22) Anmeldetag: 24.10.1990
(51) Int. Cl.: H04L 12/40

(54) **Sende- und Empfangsschaltung für lokale Rechnernetze mit Kollisionserkennung**
Transmitter and receiver circuit for local computer networks with collision detection
Circuit d'émission et de réception pour réseaux locaux d'ordinateur avec détection de collisions

(30) Priorität: 02.11.1989 DD 334124
(43) Veröffentlichungstag der Anmeldung: 08.05.1991
(73) Patentinhaber: Weidhase, Frieder, Dr.rer.nat., D-01326 Dresden (DE); Nicolaus, Dirk, Dipl.-Ing., D-01445 Radebeul (DE)
(72) Erfinder: Tränkner, Thomas, Dipl.-Ing., O-8122 Radebeul (DE); Klempin, Rainer, Dr.Ing., O-8023 Dresden (DE); Weidhase Frieder, Dr. rer. nat., O - 8054 Dresden (DE); Dirk Nicolaus, Dipl. Ing., O - 8122 Radebeul (DE)
(74) Vertreter: Münich, Wilhelm, Dr.

(56) Entgegenhaltungen:
- DE-A- 3 601 243
- DE-A- 3 700 284
- FR-A- 2 509 935

## Beschreibung

Die Erfindung kann in allen Bereichen der Rechentecknik, Automatisierungs- und Steuerungstechnik zur Anwendung kommen, wenn es gilt, Rechner in einem räumlich begrenzten Gebiet miteinander zu verbinden. Typische Einsatzfälle sind die Bürokommunikation, rechnergestütztes Entwerfen (CAD), rechnergestützte Fertigung (CAM), rechnergestütztes Planen (CAP), integrierte Fertigung (CIM) sowie der Einsatz in der Lehre.

Als Kanalzugriffsvorfahren können das bekannte CSMA/CD aber auch andere Kanalzugriffsverfahren wie das ebenfalls bekannte Token-Bus (Kollisionen treten hier in der Initialisierungsphase auf) gewählt werden.

In lokalen Rechnernetzen können Situationen auftreten, in denen gleichzeitig mehrere Rechner Informationen auf ein gemeinsames Übertragungsmedium senden. Im Falle des gleichzeitigen Sendens mehrerer Rechner kommt es auf dem Übertragungsmedium zu Informationsverfälschungen. Diese Erscheinung bezeichnet man als Kollision. Um derartige unerwünschte Zustände möglichst schnell erkennen und beseitigen zu können, wurden in der Vergangenheit verschiedene Wege eingeschlagen, die sich prinzipiell in vier Gruppen einordnen lassen:

### A) Mittelwertbildung der von den einzelnen Sendern aufgeprägten Ströme und Unterbrechung des Sendeflusses, wenn der Mittelwert die Stromergiebigkeit eines Senders signifikant überschreitet.

Diese Lösung wird weltweit am häufigsten genutzt, so z. B. in der als Quasistandard bezeichneten Musterlösung ETHERNET nach US-patent Nr.4 063 220 aus dem Jahre 1975. Nichtsdestotrotz weist sie prinzipielle Mängel auf. Dazu zählen: Der durch die Mittelwertbildung bedingte, relativ große Erkennungszeitraum und bei größeren Systemen die relativ stark eingeschränkte Kollisionserkennungssicherheit. Die Ursache hierfür liegt in den durch die Kabeldämpfung bedingten unterschiedlichen Signalpegeln naher und entfernter Sender.

### B) Vergleich der auszusendenden, unverfälschten und der empfangenen, gegebenenfalls verfälschten Informationen am Sender.

Bei dieser Lösung wird davon ausgegangen, daß sich die Informationen unterschiedlicher Sender auf dem Kabel überlagern und damit im Falle von Kollisionen der eigene Sender nicht mehr die ursprünglich zur Aussendung vorgesehenen Informationen empfängt.

Dementsprechend beschreibt DE-OS 3327489 (analog JP 57-134196) ein Datenübertragungssystem mit Kollisionsüberwachung. Das System besteht aus einer Steuerschaltung mit nachgeschalteter logischer Schaltung (UND- sowie ODER-Gatter) und einem Sendeverstärker (Treiber), einem EXOR-Gatter (Exklusives ODER), welches das gesendete mit dem empfangenen Signal verknüpft. Über eine Schaltung zur Bildung des Kollisionssignals wird das Ausgangssignal des EXOR-Gatters auf das ODER-Gatter der o. g. logischen Schaltung geführt. Dieses Patent bezieht sich jedoch nicht auf codierte Signale und betrachtet primär die Eröffnung der Datenübertragung.

Die Lösung nach DE-OS 3327489 wird hier als erste Variante des Vergleiches bezeichnet. Dieser Lösungsansatz weist bei geringen Entfernungen zum LAN-Hauptkabel sehr schnelle Erkennungszeiten (kleiner gleich einer Bit-Periode) auf. Größere Zuleitungsentfernungen erfordern jedoch eine aufwendige Zwischenspeicherung und einen zeitlich verzögerten Vergleich der gesendeten und empfangenen Datenströme.

Aus US-PS 4672543 (JP 57-152979), Fig. 4 ist spätestens seit Juni 1987 bekannt, die modulierten Sendedaten mit den empfangenen noch nicht demodulierten Daten mittels einer Antivalenzfunktion (EXOR) zu vergleichen. Diese Lösung vermeidet Nachteile des zuvor erörterten Vergleiches der nicht modulierten Sende- und Empfangssignale, insbesondere gestattet dieser Lösungsansatz die Verwendung eines beliebig langen Zubringerkabels, falls die Kollisionserkennungsschaltung in einer unmittelbar am LAN-Hauptkabel plazierten Kabelanschlußeinheit untergebracht ist. Die Kabelanschlußeinheit wird je nach Sprachgebrauch auch als Medium Attachment Unit oder Transceiver bezeichnet.

Obwohl die zweite Variante des Vergleiches auf Grund der größeren maximalen Länge des Zubringerkabels Vorteile bietet, wird weder von der ersten noch von der zweiten Variante des Vergleiches das aus der Kabeldämpfung resultierende Hauptproblem der unterschiedlichen Signalpegel naher und entfernter Sender berührt.

### C) Filtertechnische Heraussiebung von niederfrequenten Schwebungsanteilen der Überlagerungssignale.

In diesem Fall wird davon ausgegangen, daß bei Kollisionen die verfälschten Signale niederfrequente Schwebungsamplituden erzeugen. Vorteilhaft wirkt sich dabei aus, daß erhebliche Dämpfungen zugelassen werden können, da auch aus Signalen mit erheblich voneinander abweichenden Amplituden Schwebungen auf Grund ihrer wesentlich anderen Frequenzlage relativ leicht erfaßbar sind. Nachteilig macht sich bemerkbar, daß der Filteraufwand nicht unbedeutend ist und die Erkennungszeit wesentlich größer ist, als bei Lösungen nach Punkt B.

### D) Aussendung einer sogenannten Jam-Folge bei Kollisionserkennung.

In diesem Fall wird die Kollisionserkennungssicherheit erhöht (-verstärkt-), indem der Zeitraum von Kollisionen künstlich vergrößert wird, so daß möglichst alle beteiligten Stationen eine Chance zum Erkennen der Kollisionen erhalten.

Beispielsweise nutzt das US-Patent IntCL.² H04Q 9/00 "Multipoint Data Communication System with Collision Detection" Nr.4,063,220 (31.03.1975) von R.M. Metcalfe, O.R. Boggs, C.P. Thacker und B.W. Lampson die Jam-Folge für das inzwischen weltweit genutzten Zugriffsverfahrens "CSMA/CD". Dieser Lösungsansatz ist auf Kosten eines zusätzlichen Zeitbedarfes zur Verbesserung aller unter A) bis C) aufgeführten Wege geeignet, er versagt aber, sobald Kollisionen mit den bekannten Methoden überhaupt nicht erfaßbar sind.

Der Zweck der Erfindung besteht darin, mit relativ dünnem und preiswortem Kabel wesentlich weiter übertragen zu können, als bisher üblich war. Die ökonomischen Einsparungen ergeben sich dabei nicht allein aus der Einsparung von Kabelkosten, sondern auch aus der Möglichkeit, größere Übertragungstrecken zu erschließen oder im Bereich höherer Dämpfungen mit größerer Übertragungsgeschwindigkeit arbeiten zu können.

Durch eine wesentliche Verbesserung der Kollisionserkennungssicherheit und der erhöhten Erkennungswahrscheinlichkeit werden qualitative Verbesserungen der Betriebssicherheit und Verfügbarkeit lokaler Rechnernetze, insbesondere eine erhebliche Senkung des Zeitbedarfes für das Einmessen und turnusmäßige Nachstellen von Arbeitspunkten der Sende-, Empfangs- und Kollisionserkennungsschaltungen angestrebt.

Aufgabe der Erfindung ist es, für die Verkopplung von Rechnern zu einem lokalen Rechnernetz Sende- und Empfangsstufen mit Kollisionserkennung bereitzustellen, die sich gegenüber bekannten Lösungen durch eine hohe Kollisionserkennungswahrscheinlichkeit, schnelle Kollisionserkennung und hohe Störfestigkeit auszeichnen.
Es sollen folgene Randbedingungen gelten:
1) Es wird ein Kodierungsverfahren mit einem je Bitperiode feststehenden Tastverhältnis genutzt.
2) Es werden in entsprechenden linienförmigen Netzen Sendestufen eingesetzt, die nur in einer Phasenlage aktiv sind.

Sowohl stark als auch schwach einfallende Sender sollen ohne Verfälschung des Tastverhältnisses empfangen werden und ein Kabelbruch bzw. ein fehlenden Kabelabschlußwiderstand muß erkannt werden.

Erfindungsgemäß wird die Aufgabe dadurch gelöst, daß eine Schaltungsanordnung verwendet wird, bei der die zu sendenden Daten TxD über einen Codierer und Sendeverstärker in das Hauptkabel des Rechnernetzes eingespeist werden und über einen ersten, als Eingangsverstärker wirkenden ersten Komparator mit zugeordnetem Schwellwertstellglied und einen Decoder die empfangenen Daten RxD der Station zur Verfügung stehen. Codierer und Decodierer arbeiten mit einem je Bitperiode feststehenden Tastverhältnis. Die codierten Daten liegen gleichzeitig am Sendeverstärker und am Verbotseingang einer Inhibit-Funktion an. Deren Ausgang gibt innerhalb jeder Bitperiode eine digitale Entscheidung über das Vorliegen von Signalanteilen anderer Stationen ab. Dabei wird davon Gebrauch gemacht, daß die Eigenschaften bestimmter Codierungsvorschriften, ein festes Tastverhältnis zu erzeugen, eine schelle (d. h. innerhalb einer Bitperiode abgeschlossene) Kollisionserkennung gestatten.

In den je Bit-Periode auftretenden Phasen der eigenen Sendeinaktivität ist das Signal anderer Stationen nahezu unverfälscht auswertbar. Durch Einsatz eines zweiten eigenständigen Komparators für den Kollisionserkennungszweig kann mit Hilfe eines zweiten Stellgliedes die Nachweisschwelle wesentlich gesenkt werden. Insbesondere kann auf diese Weise eine Unabhängigkeit vom Empfangszweig (erster Komparator mit Schwellwertstellglied) erreicht werden.

Eine unabhängig von der Signalamplitude das Tastverhältnis von 1:1 reproduzierende Eingangsstufe ergibt sich durch Abtrennung der Gleichspannungskomponenten mittels RC-Glied im Eingangszweig. Dabei dient ein über die positive Spannungsrückführung gesteuerte Hysterese der Unterdrückung unerwünschter Brumm- und Störsignaleinstreuungen.

Kabelbrüche oder fehlende Kabelabschlußwiderstände äußern sich in außergewöhnlich hohen Signalamplituden auf dem LAN-Hauptkabel. Somit sind sie über einen den dritten Komparator und dessen Schwellwertstellglied nachweisbar. Entsprechend dem Standard ISO 8802.3 wird diese Information in ein summarisches Signal der Bezeichnung "Signal Quality" eingebunden, was mit einer Oder-Funktion zwischen der Inhibit-Funktion und der nachgeordneten Baugruppe erfolgt. Diese Baugruppe kann eine Schaltung zur Ausblendung von Störimpulsen sein, der ein retriggerbarer monostabiler Multivibrator nachgeschaltet ist. Letzterer stellt im Interesse hoher Störfestigkeit statische Signale für die angeschlossenen Rechner bereit.

Die maximale Übertragungslänge wird in der erfindungsgemäßen Lösung primär durch die Summe der Restströme aller angeschlossenen Stationen begrenzt. Als weitere Begrenzungen der maximalen Übertragungslänge wirken lediglich Effekte sekundärer Ordnung, wie z. B. Rückstreuungen durch Inhomogenitäten des Kabels und verzögerte Ladungsfreisetzung durch das Dielektrikum des Kabels.
Die Erfindung soll nachfolgend an einem Ausführungsbeispiel erläutert werden. In den Zeichnungen zeigen
- Fig. 1: eine erste erfindungsgemäße Schaltungsanordnung nach Anspruch 1 und 4,
- Fig. 2: eine erweitere Schaltungsanordnung nach Anspruch 1, 2 und 4,

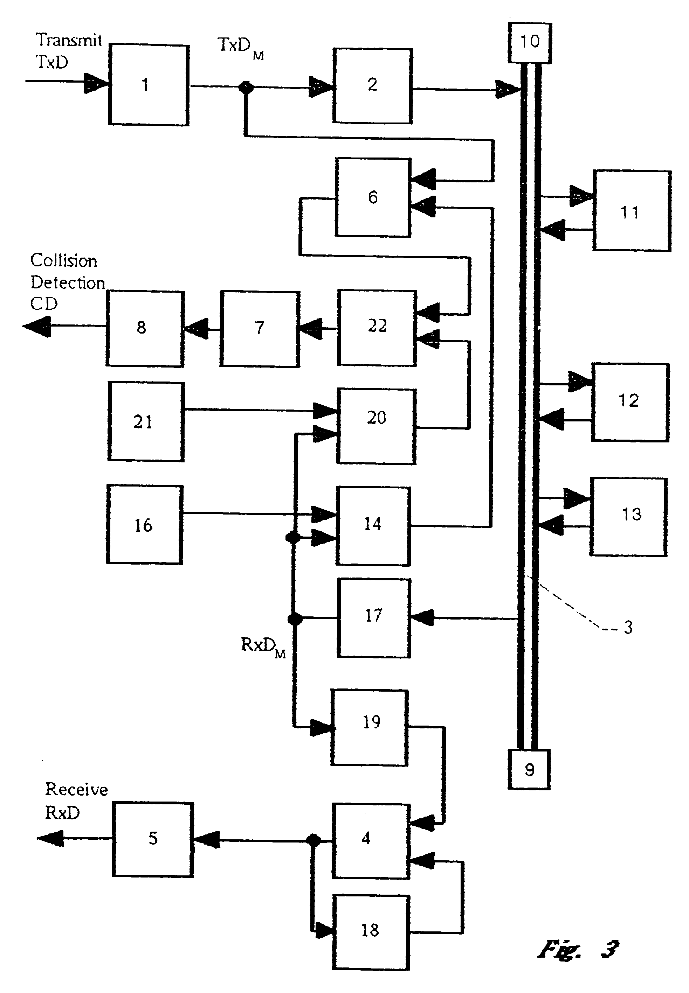

- Fig. 3: eine dritte erfindungsgemäße Schaltungsanordnung nach Anspruch 1-5,
- Fig. 4: die Signalverläufe für typische Betriebszustände, wobei
- Fig.4A: die zu übertragende information TxD,
- Fig.4B: die Sendeerlaubnis (Transmitting),
- Fig.4C: das modulierte Sendesignal,
- Fig.4D: der Amplitudenverlauf auf dem LAN-Hauptkabel 3,
- Fig.4E: die dekodierten Empfangsdaten RxD,
- Fig.4F: das Ausgangssignal des zweiten Komparators 14 und
- Fig.4G: das Ausgangssignal des dritten Komparators 20.

Mit den über Kreuz gestrichelten Flächen werden (unbestimmte Pegelwerte gekennzeichnet.

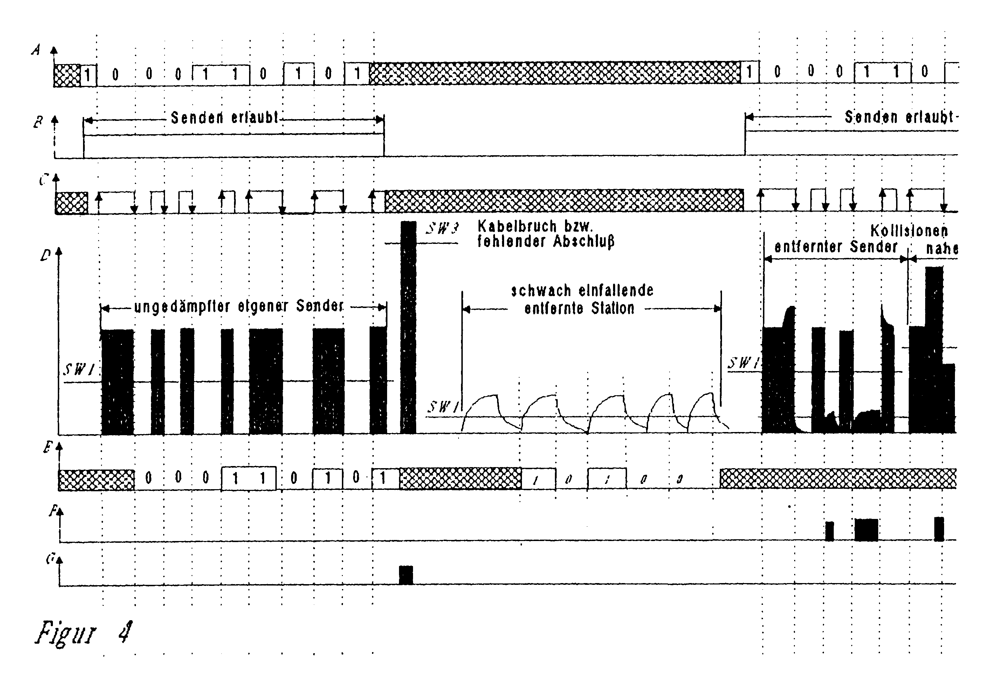

Die zu sendende Information TxD (Fig.4A) durchläuft einen Codierer, der entsprechend internationalen Standards (ISO 8802.3) als Manchester-Diphase-Codierer 1 ausgebildet ist. Dieser Codierer garantiert ein je Bitperiode konstantes Tastverhältnis von 1 : 1 (siehe Fig.4C), was die erste notwendigen Voraussetzungen zur Nutzbarkeit der vorgeschlagenen Lösung erfüllt.

Auf dem weiteren Signalweg zum LAN-Hauptkabel des lokalen Rechnernetzes 3 folgt ein Senderverstärker 2, der zweckmäßigerweise als eine ein- bzw. ausschaltbare Stromquelle realisiert ist. Diese Realisierungsform der Sendestufe erfüllt die zweite notwendige Voraussetzung der Anwendbarkeit der vorgeschlagenen Lösung, d. h. die Inaktivität der Sendestufe während einer Phasenlage des modulierten Sendesignales.

Parallel zum Sendetrakt wird über einen hochohumigen Eingangsverstärker 4 das Empfangssignal des LAN-Hauptkabels (Fig.4D) abgegriffen. Die Hochohmigkeit der Empfangsstufe kann beispielsweise über einen FET-Sourcefolger oder einen mit Darlingtontransistoren bestückten Differenzvorstärker erreicht werden. Die letztere Lösungsvariante bietet insbesondere unter Einsatz monolitischer Transistor-Arrays die Vorteile einer hohen Temperatur- und Alterungsstabilität.

Ein RC-Glied 19 dient in Verbindung mit einem Schmitt-Trigger 4/18 einer von der Kollisionserkennung unabhänigen Empfangssignalaufnahme. Dabei gestattet das RC-Glied 19 eine automatische Einpegelung des Arbeitspunktes (in Fig.4D mit SW1 bezeichnet) in Abhängigkeit von der Höhe der einfallenden Signalamplitude. Die Zeitkonstante des RC-Gliedes ist so einzustellen, daß sie so klein wie möglich gewählt wird, um ein schnelles Einschwingen zu gestatten. Die Zeitkonstante darf aber nicht kleiner gewählt werden, als es der Bitfolgefrequenz entspricht. Den angeschlossenen Rechnern wird die Empfangsinformation (RxD) nach der Manchester-Decodierung 5 angeboten.

Das Signal über den Sachverhalt von Kollisionen bildet sich ggf. aus mehreren Ursachen:
A) Der Einsatz eines eigenständigen Komparators 14 für die Kollisionserkennung gestattet eine extrem empfindliche Erfassung von Signalen anderer Stationen 11 bis 13. Der störende Einfluß des eigenen Senders 2, der durch fehlende Kabeldämpfung besonders stark einfällt (siehe Fig.4D), wird durch Zuführung des codierten Sendesignals am Verbotseingang einer Inhibit-Funktion 6 nur während der vom Manchester-Codierer 1 gebildeten inaktiven Zeitphasen gestattet.
B) Mit Hilfe eines dritten Komparators 20 werden Kabelbrüche und fehlende Abschlußwiderstände erfaßt, indem dieser Komparator außergewöhnlich große Signalamplituden auf dem LAN-Hauptkabel 3 ermittelt. Dabei ist es nicht erforderlich, daß dieser Komparator besondere Genauigkeitsansprüche erfüllen muß. In einer Variante des Ausführungsbeispieles konnte hierfür mit Erfolg ein Festspannungskomparator eingesetzt werden, welcher über nur einen Eingang verfügt, so daß letztlich auch ohne das Stellglied 16 gearbeitet werden konnte.
C) Die Zusammenführung der durch die verschiedenen Fehlerzustände gebildeten Signale erfolgt in dem Oder-Glied 22. Diesem ist ein RC-Glied 7 zur Herausfilterung kurzer Störimpulse und zur Elimination der durch unterschiedliche Laufzeiten gebildeten Spikes sowie ein retriggerbarem monostabilen Multivibrator 8 nachgeschaltet.

Der Ausgang der Kollisionserkennungsstufe steht den angeschlossenen Rechnern als Interruptsignal "Collision Detection" zur Verfügung. Die Zeichnung weist außerdem die Abschlußwiderstände des LAN-Hauptkabels 9, 10 sowie weitere Stationen 11, 12, 13 aus.

Figur 4D erläutert die einzelnen Komparatorschwellen und die typischen Signalverläufe bei einer ungestörten Übertragung (links), einem fehlenden Abschlußwiderstand bzw. Kabelbruch, dem ungestörten Empfang einer entfernten Station (in der Mitte der Figur 4D), und Kollisionen mit entfernten bzw. nahen Sendern (rechts). Insbesondere zeigt Figur 4D das sehr wohl stark unterschiedliche Signalamplituden vorkommen können. Dabei wurden in Figur 4D Relationen zu Grunde gelegt, welche den realen Pegeln arbeitsfähiger Netze entsprechen. Je nach technischer Realisierung könnten die Pegellagen in Figur 4D auch bezüglich Oben und Unten seitenverkehrt auftreten. In einer Variation des Ausführungsbeispieles wurde von dieser Möglichkeit Gebrauch gemacht, um anstelle von diskreten Bauelementen handelsübliche integrierte Schaltkreise einsetzen zu können.

Figur 4G zeigt des Ausgangssignal des dritten Komparators, der insbesondere zu Erkennung von fehlenden Abschlußwiderständen und Kabelbrüchen vorgesehen ist.

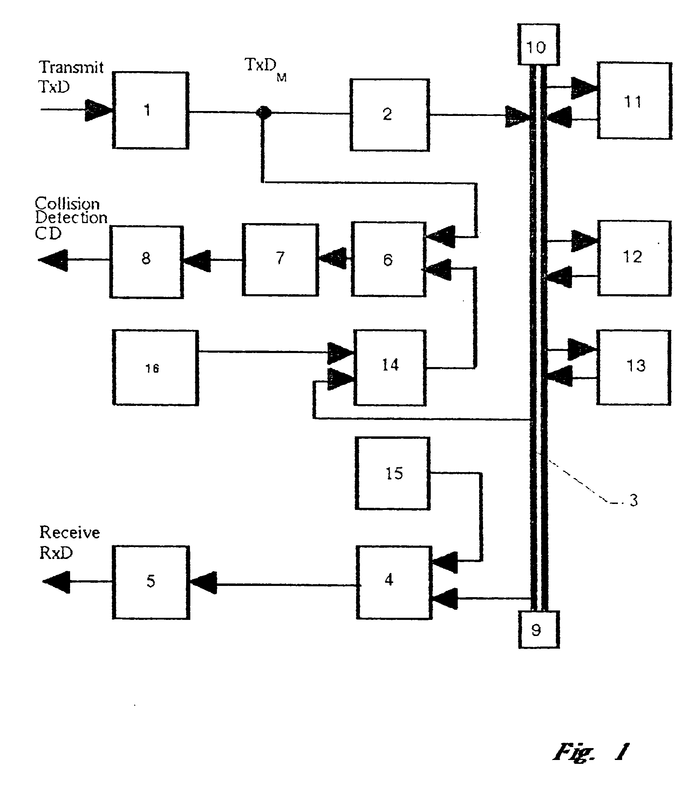

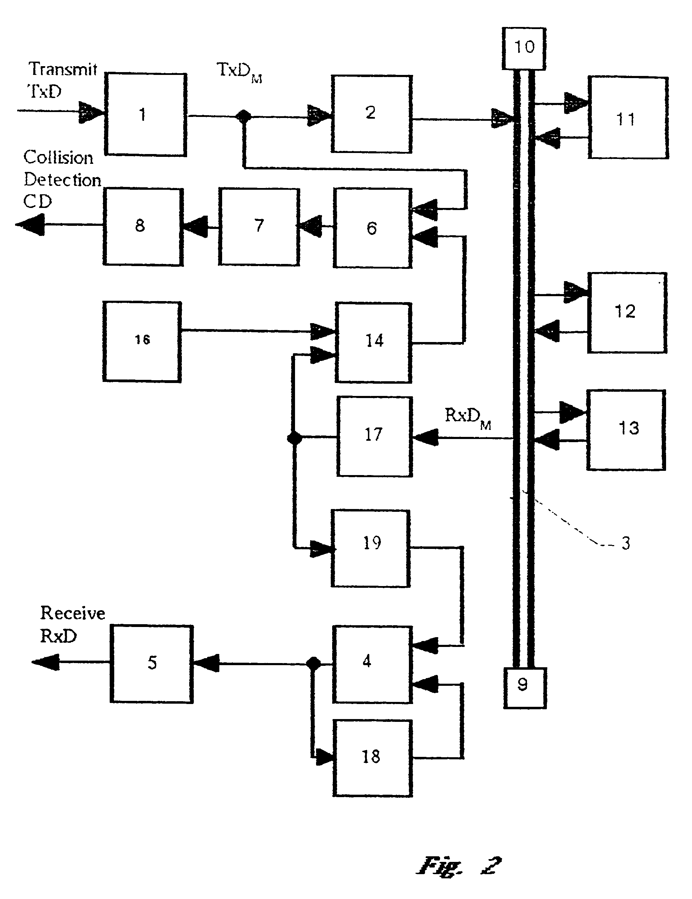

Die Darlegungen zum Ausführungsbeispiel beziehen sich auf eine weitgehende, komplexe Ausschöpfung aller vom Lösungsansatz gebotenen Möglichkeiten entsprechend den Ansprüchen 1 bis 5. Abgerüstete Varianten ergeben sich durch Verzicht auf einzelne Funktionsgruppen, indem analog der Figuren 1 und 2 nur einzelne der fünf Ansprüche genutzt werden.

### Bezugszeichen

1 Codierer
2 Sendeverstärker
3 Hauptkabel des lokalen Rechnernetzes
4 erster Komparator
5 Decoder
6 Bewertungsschaltung mit Erlaubniseingang (Inhibit-Funktion)
7 Ausblender kurzer Impulse
8 retriggerbarer monostabiler Multivibrator
9 Abschlußwiderstand
10 Abschlußwiderstand
11 weitere Station
12 weitere Station
13 weitere Station
14 zweiter Komparator
15 Stellglied für die Schwelle des ersten Komparators
16 Stellglied für die Schwelle des zweiten Komparators
17 Impedanzwandler
18 Stellglied zur Bestimmung der Hysterese
19 RC-Glied
20 dritter Komparator
21 Stellglied für die Schwelle des dritten Komparators
22 Oder-Verknüpfung

## Patentansprüche

1. Sende- und Empfangsschaltung für lokale Rechnernetze mit Kollisionserkennung, bei der die zu sondenden Daten über einen Codierer, der mit einem festen Tastverhältnis je Bitperiode arbeitet und einen Sendeverstärker, der nur in einer Pegellage aktiv ist, in das Rechnernetz eingespeist werden und über einen Decoder die empfangenen Daten der Station zur Verfügung stehen, gekennzeichnet dadurch, daß die im Codierer (1) codierten eigenen Sendedaten (TxD_{M}) gleichzeitig am Verbotseingang einer Inhibit-Funktion (6) und dem Sendeverstärker (2) anliegen, während die ggf. durch andere Stationen (11-13) verfälschten codierten Eingangsinformationen (RxD_{M}) über einen ersten Komparator (4) am Decoder (5) und über einen zweiten Komparator (14) am zweiten Eingang der das Kollisionssignal (CD) bildenden Inhibit-Funktion (6) anliegen, wobei die Komparatorschwellen in an sich bekannter Weise mittels Stellglieder (15) und (16) separat einstellbar sind.

2. Schaltungsanordnung nach Anspruch 1, gekennzeichnet dadurch, daß die ggf. durch andere Sender (11-13) verfälschten codierten Eingangsinformationen (RxD_{M}) über einen Impedanzwandler (17) an den Komparatoren (4, 14) anliegen.

3. Schaltungsanordnung nach den Ansprüchen 1 und 2, gekennzeichnet dadurch, daß das Ausgangssignal des Impedanzwandlers (17) über ein RC-Glied (19) an den ersten Komparator (4) geführt ist und dieser Komparator in an sich bekannter Weise mittels einer positiven Mitkopplung (18) zu einem Schmitt-Trigger beschaltet ist.

4. Schaltungsanordnung nach Anspruch 1, gekennzeichnet dadurch, daß der Inhibit-Funktion (6) eine Schaltung zur Ausblendung von Störimpulsen (7) sowie ein retriggerbarer monostabiler Multivibrator (8) nachgeschaltet ist.

5. Schaltungsanordnung nach den Ansprüchen 1 und 2, gekennzeichnet dadurch, daß das Ausgangssignal des Impedanzwandlers (17) zusammen mit dem Signal eines Stallgliedes (21) an einem dritten Komparator (20) anliegt, dessen Ausgangssignal mittels einer Oder-Funktion (22) in den Signalweg zwischen der inhibit-Funktion (6) und der nachgeordneten Baugruppe (7) eingekoppelt ist.

## Claims

1. Transmitter and receiver circuitry for local computer networks with collision detection, wherein the data to be transmitted is supplied into said computer network via an encoder operating on a constant duty cycle per bit period, and a transmission amplifier active only in one level relationship, and wherein the received data is available to the stations via a decoder, **characterized** in that the system's own transmission data (TxD_{M}) encoded in said encoder (1) is applied simultaneously at the inhibiting input of an inhibit function (6) and said transmission amplifier (2) whilst the coded input information (RxD_{M}), which may be adulterated by other stations (11 to 13), is applied via a first comparator (4) at said decoder (5) and via a second comparator (14) at the second input of said inhibit function (6) forming said collision signal, with the comparator thresholds being adapted to be separately adjusted by means of control elements (15 and 16) in a manner known per se.

2. Circuitry according to Claim 1, **characterized** in that said coded input information (RxD_{M}), which may be adulterated by other transmitters (11 to 13), is applied via an impedance transformer (17) to said comparators (4, 14).

3. Circuitry according to Claim 1 and 2, **characterized** in that the output signal from said impedance transformer (17) is transferred via an RC element (19) to said first comparator (4), and that this comparator is connected, in a manner known per se, by means of a positive locked coupling (18), to form a Schmitt trigger.

4. Circuitry according to Claim 1, **characterized** in that said inhibit function (6) is followed by a joining circuit for masking out noise pulses (7) as well as by a re-triggerable monostable multivibrator (8).

5. Circuitry according to Claims 1 and 2, **characterized** in that the output signal from said impedance transformer (17), together with the signal from a control element (21), is applied to a third comparator (20) whose output signal is coupled into the signal transfer path between said inhibit function (6) and said joining assembly (7).

## Revendications

1. Circuit d'émission et de réception pour réseaux locaux d'ordinateurs à détection de collisions, dans lequel les données à émettre sont alimentées dans ledit réseau d'ordinateurs via un codeur qui travaille à la base d'un taux d'impulsions constant par période binaire et un amplificateur de transmission qui n'est actif qu'à un seul rapport de niveaux, et dans lequel les données reçues sont disponibles aux postes via un décodeur, **caractérisé** en ce que les données d'émission propre (TxD_{M}), qui sont codées dans ledit codeur (1), sont appliquées en même temps à l'entrée d'arrêt d'une fonction d'arrêt (6) et audit amplificateur de transmission (2), pendant que les informations d'entrée codées (RxD_{M}), qui sont éventuellement falsifiées par des autres postes (11 à 13), sont appliquées, via un premier comparateur (4), audit décodeur (5) et, via un deuxième comparateur (14), à la deuxième entrée de ladite fonction d'arrêt (6) qui forme ledit signal de collision, lesdits seuils de comparaison étant prévus à être réglés individuellement moyennant des éléments de commande (15 et 16) de façon connue en soi.

2. Circuit selon la revendication 1, **caracterisé** en ce que lesdites informations (RxD_{M}), qui sont éventuellement falsifiées par des autres émetteurs (11 à 13), sont appliquées, via un transformateur d'adaptation d'impédance (17), auxdits comparateurs (4, 14).

3. Circuit selon les revendications 1 et 2, **caractérisé** en ce que le signal de sortie émis par ledit transformateur d'adaptation d'impédance (17) est transmis, via un élément RC (19), audit premier comparateur (4), et en ce que ce comparateur est relié, de façon connue en soi, moyennant une rétroaction (18), à former une bascule de Schmitt.

4. Circuit selon la revendication 1, **caractérisé** en ce que ladite fonction d'arrêt (6) est suivie d'un circuit attaché à extraire des impulsions de bruit (7), ainsi que d'une bascule monostable re-déclenchable (8).

5. Circuit selon les revendications 1 et 2, **caractérisé** en ce que ledit signal de sortie, émis par ledit transformateur d'adaptation d'impédance (17), ensemble avec le signal émis d'un élément de commande (21), est appliqué à un troisième comparateur (20) dont le signal de sortie est couplé dans la voie de transmission des signaux entre ladite fonction d'arrêt (6) et ledit ensemble suivant (7).
